**Europäisches Patentamt**

**European Patent Office**

**Office européen des brevets**

(19)

(11) Publication number: **0 065 971**

**B1**

(12) # EUROPEAN PATENT SPECIFICATION

(45) Date of publication of patent specification: **20.04.88**

(51) Int. Cl.⁴: **F 24 J 2/20**

(21) Application number: **82900005.8**

(22) Date of filing: **03.12.81**

(86) International application number:
**PCT/AU81/00180**

(87) International publication number:
**WO 82/02087 24.06.82 Gazette 82/16**

(54) **SOLAR COLLECTOR.**

(30) Priority: **08.12.80 AU 6820/80**

(43) Date of publication of application:
**08.12.82 Bulletin 82/49**

(45) Publication of the grant of the patent:
**20.04.88 Bulletin 88/16**

(84) Designated Contracting States:
**CH DE FR LI NL SE**

(56) References cited:
**DE-A-2 504 347**
**DE-A-2 640 020**
**DE-A-2 747 850**
**DE-A-2 810 411**
**DE-B-2 901 690**
**FR-A-2 330 972**
**FR-A-2 405 447**
**US-A-2 552 237**
**US-A-3 254 644**
**US-A-3 984 881**
**US-A-4 033 325**
**US-A-4 084 573**
**US-A-4 106 479**
**US-A-4 191 167**
**US-A-4 212 290**

(73) Proprietor: **DELACRETAZ, John**
**15 Mortimer Street**
**Heidelberg, Vic. 3084 (AU)**

(72) Inventor: **DELACRETAZ, John**
**15 Mortimer Street**
**Heidelberg, Vic. 3084 (AU)**

(74) Representative: **Ward, Antony John Fowler**
**Seven Acres Coddenham Green**
**GB-Ipswich, Suffolk IP6 9UN (GB)**

Courier Press, Leamington Spa, England.

## Description

Technical Field

This invention relates to solar collectors.

Solar collectors generally comprise panels of hollow heat conductive materials such as copper or brass, containing a heat transfer medium such as water. The panels are orientated to catch the sun's rays to cause transfer of heat to the water within the panels. The water can then be circulated for heating purposes. For this type of panel to operate efficiently, it is important that the panel is orientated so as to directly catch the rays of the sun. Due to the sun's movement in the sky, it is difficult to ensure that the majority of the surface area of the panel is in direct line with the rays of the sun. To overcome this problem, it is usual to provide banks of such panels at various orientations relative to the sun so that certain of the panels catch the sun's rays at certain times of the day. Other more complicated and sophisticated devices incorporate the use of servo motors to vary the orientation of the panels to ensure that the panels follow the path of the sun through the sky.

The former solution tends to produce a cumbersome and unsightly array of solar collectors incorporating large quantities of the conductive material. The latter solution is inherently expensive, due to the sophistication and complication of the servo mechanism. The present invention relates to a simple yet effective solution to the above problems.

Prior Art

In U.S. Patent 4,212,290, the solar collector is in the form of an inverted cone supported by insulating material. The heat transfer medium is covered by a spiral tube of conical profile positioned inside a conical reflector. The assembly is covered by one or more sheets of transparent or translucent material.

However, the collector described above has the disadvantages that the rays of the sun have to pass through the cover and across the space within the collector body before they impinge on the spiral tube. Water or debris such as leaves can collect on the planar cover to substantially reduce the efficiency of the collector.

Summary of the Invention

According to the present invention, there is provided a solar collector comprising a collector means in the form of an inverted cone and a transparent cover member characterised in that the collector means is in the form of a pair of parallel extending closely spaced apart sheets of heat conducting material, the sheets being secured together to define a passageway for heat transfer medium, the collector means having a fluid inlet and outlet; the cover member being of corresponding shape to that of the collector means, the collector means and cover including a drain aperture whereby the collector means is covered by the transparent cover member.

Brief Description of Drawings

Various embodiments of solar collector will now be described by way of example only with reference to the accompanying drawings, Figs. 1 to 5 showing prior solar collectors and Figs. 6 to 8 solely showing embodiments of solar collector according to the invention.

Figure 1 is a cross-sectional view of one prior solar collector assembly,

Figure 2 is a cross-sectional view of another prior solar collector assembly,

Figure 3 is a cross-sectional view of part of the assembly illustrated in Figure 2,

Figure 4 is a cross-sectional view similar to Figure 3 but illustrating a pipe of elongate cross-section,

Figure 5 is a cross-sectional view of a further prior floating solar collector assembly,

Figure 6 is a cross-sectional view of a first solar collector assembly according to the invention,

Figure 7 is a cross-sectional view of another example of a solar collector assembly according to the invention, and

Figure 8 is a side-on view of a plurality of solar collector assemblies according to the invention mounted on a bracket assembly.

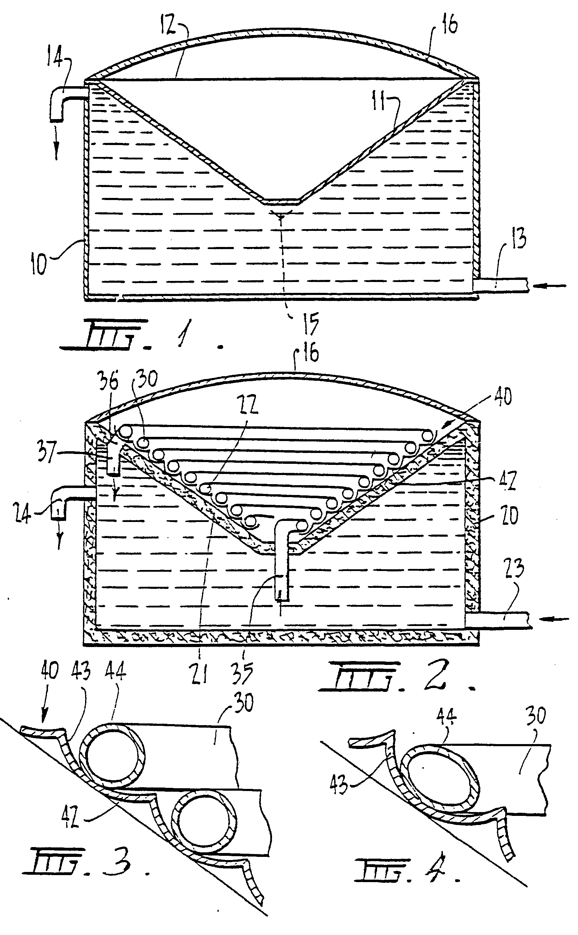

A prior art solar collector assembly as illustrated in Figure 1 comprises a cylindrical container (10) within which is located a solar collector (11) in the form of a conical plastics sheet (12) secured to the top of the container (10) so that the cone is inverted as shown in Figure 1. The container (10) is provided with an inlet (13) at the base and an outlet (14) adjacent the top of the container. The inlet (13) and outlet (14) are arranged to facilitate the transfer of a heat transfer medium such as water.

The collector assembly is positioned with the axis of the cone extending vertically. The included angle of the conical collector and therefore the inclination of the wall to the horizontal is dependent on the latitude at which the assembly is to be used. Preferably, the angle to the horizontal should be about the same as the angle of the latitude of use. For instance, when designed for use in Victoria, Australia, the inclination of the wall is 36° to the horizontal, resulting in the collector having an included angle of 108°. As the rays of the sun are directed to the conical surface of the collector (12), radiant heat is conducted through the walls of the collector (12) to the water thereunder causing the water to increase in temperature and rise in the container to be released from the exit (14). The collector assembly illustrated in Figure 1 is for particular use in very hot climates, where for most of the daylight hours the sun would beat down on the collector (12) to heat the water in the container (10). A pump (not shown) could be incorporated to assist in transfer of the heating medium.

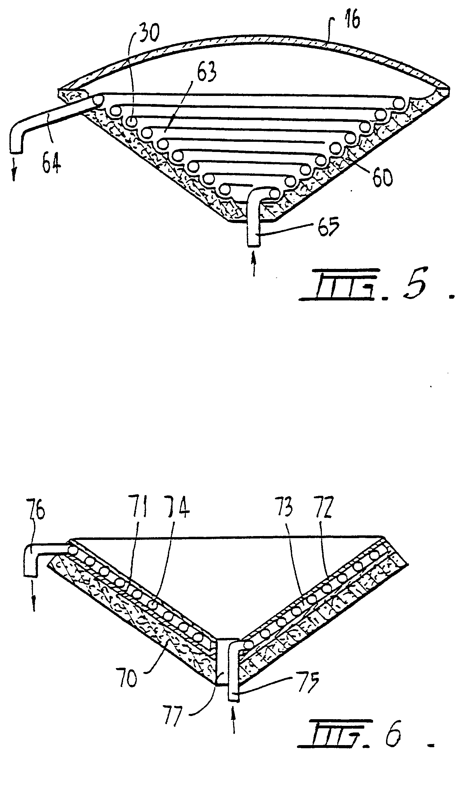

Another form of collector assembly is illustrated in Figure 2 for use in colder climates. In this assembly, the container (20) is lined with an insulation material (21) to prevent heat loss to the exterior. The container (20) has a similarly positioned inlet (23) and outlet (24) and is provided with a conical collector (22). In this case, the collector is defined by a spirally wound pipe (30) of heat conductive material such as copper. The pipe (30) is wound in the form of a cone (31). As shown in Figure 2, the heat transfer medium, preferably water, enters the container (20) via the inlet (23) and is passed via a conduit (35) to the lower end of the coil (30). The heat medium flows along the coil (30) to be released at an upper end (36) adjacent the exit (24). A valve (37), preferably heat sensitive, is provided at the upper end (36) to control release of the heat transfer medium.

To further assist in the collection of the solar rays, a sheet (40) of reflective material is interposed between the insulation (21) and the coil (30). The reflector (40) has the effect of diverting the rays of the sun that would not be directed onto the pipe (30) onto the underside of the pipe thereby improving the collective efficiency of the collector. As shown in Figure 2, the reflector may be provided with a spiral depression (42) that extends round the conical underside of the pipe to positively locate and support the collector. Where a spiral pipe is used, the internal diameter of the cross-section of the pipe is preferably between 5 and 12 mm. The pipe is preferably of between 18—22 gauge.

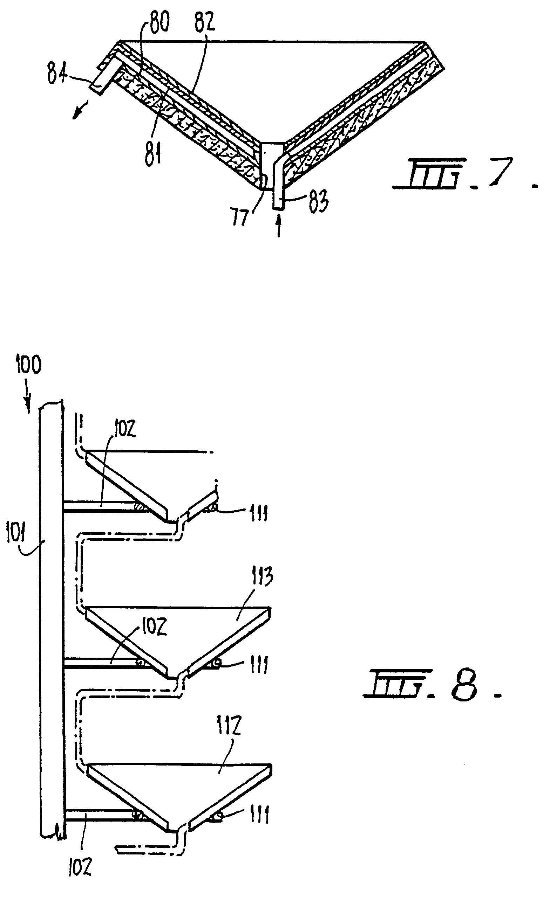

Figures 3 and 4 illustrate in more detail, the manner in which the reflector (40) supports the pipe (30). The spiral depression (42) presents a concave surface (43) to the underside of each circular cross-section (44) of the pipe. Should the pipe be of elliptical cross-section as shown in Figure 4, the depression (42) is arranged to assume a similar profile to provide both support and suitable reflective characteristics. It is understood that the pipe (30) may also be of "dog biscuit" cross-section (not shown), in which case the reflector would be suitably formed to accommodate and locate the pipe. It is also understood that the reflector may be a smooth walled cone. The reflector may be mirrored glass or plastics, rolled aluminium or highly reflective metal such as stainless steel or polished brass.

In a further embodiment illustrated in Figure 5, there is provided a collector assembly particularly for use to heat large volumes of water such as contained by swimming pools. In the embodiment illustrated in Figure 5, an inverted, conical support body (60) is arranged to float on the surface of the water. The conical body includes a coiled collector (63) similar to the collector described with reference to the embodiments illustrated in Figures 2 to 4. The collector (63) is provided with inlet and outlet conduits (64) (65) and operates so that as the sun beats down on the collector (63), the water contained in the pipe (30) rises in temperature to cause a transfer of water from the pool through the pipe and back to the pool. By providing a number of such floating collectors on the pool surface, a substantial increase in the water temperature can be produced. The support body (60) may be of any suitable heat insulating material such as fibre glass, polystyrene, fibrous wood or even porous concrete. The upper surface of the support body may also include a spiral depression lined with reflective material to operate in a similar manner as the embodiments of Figures 2 to 4.

In the embodiments illustrated with reference to Figures 1 to 5, a transparent curved dome (16) is placed on the collector to present a convex surface to the exterior to prevent entry of leaves or other foreign matter onto the surface of the collector. The curved dome may be manufactured of glass or transparent plastics. The collectors of Figs. 1—5 are outside the scope of the present invention and do not constitute embodiments thereof.

In Figure 6, there is illustrated a solar collector assembly embodying the invention, comprising a conically shaped insulator (70) supporting thereon a solar collector comprising a sandwich of two parallel extending sheets of plastics (71) (72), the sheets being joined together at their inner and outer ends to define a conical enclosure 5—15 mm thick. The thickness of the enclosure is dictated by the outside diameter of a spirally wound pipe (74) of heat conductive material that is positioned within the enclosure, the pipe interior defining the fluid passageway for transfer of the heat conducting medium. The spirally wound pipe is substantially the same as the pipe described in the earlier embodiments and includes an inlet (75) and outlet (76). The upper of the sheets (72) is constructed of highly transparent plastics material. The lower sheet (71) is preferably covered in a reflective material. The example of collector assembly illustrated in Figure 6 may be arranged to float in a similar manner to the assembly illustrated with reference to Figure 5. However, in this case, no dome 16 is provided and the assembly simply floats by the buoyancy provided by the layer of insulating material (70). To facilitate escape of rain that may collect in the interior of the collector, a centrally positioned hole (77) is positioned in the base of the collector.

In the embodiment illustrated in Figure 7, a similar insulating panel having a centrally positioned hole (77) is used to support a collector assembly again in sandwich form. However, in this embodiment, the sandwich comprises a lower conical layer (80) of matt black plastics joined at its ends to a parallel extending thin sheet (81) of clear plastics material to define an enclosure 1 and 5 mm thick. The outer layer (81) of plastics is covered by a clear plastics sheet (82). An inlet (83) and outlet (84) is attached to the fluid passageway defined between the parallel sheets in a similar manner as in the previous embodiments. In this embodiment, the heat transfer medium simply flows within the passageway defined between the parallel extending sheets. The use of plastics to define the sandwich of the collector renders the unit economical to make. It is, however, understood that these sheets could be constructed of thin heat conducting metal such as copper or brass of 0.47—0.56 mm thickness (18—22 gauge). The plastics panels are approximately 3 mm thick.

The embodiment illustrated in Figure 7 has a centrally positioned drainage hole (77) in the base of the collector assembly.

To improve the flow of heat transfer medium within the collector illustrated in Figure 7, it is understood that the interior surfaces of one or both of the parallel extending sheets that define the fluid passageway may be provided with a spiral ridge to ensure that the fluid must flow along a spiral path from the inlet to the outlet. The effect of this spiral flow and the comparatively narrow gap between the parallel extending sheets is that the heat transfer medium conducts a smooth and untroubled flow to effectively transfer the heat absorbed on the surfaces of the collector.

In all the embodiments illustrated above, the dimensions of the unit are substantially similar. The diameter of the collector is arranged to be approximately 1 metre. The depth of the collector is arranged to be 250 mm and the width of the diameter of the drainage hole in the centre of the collector is approximately 200 mm.

Figure 8 illustrates an embodiment of the present invention in which collector assemblies of the kind illustrated in Figures 6 and 7 are mounted spaced apart on a support bracket assembly (100). The bracket assembly comprises a central vertically extending pillar (101) having radially extending support arms (102) vertically spaced apart to define a plurality of support assemblies for the collector assemblies (110). The spacing both radially and vertically of the support arms may be adjusted so that the vertical spacing and orientation of the collectors may be suitably adjusted to obtain the maximum benefit from the rays of the sun. Each support arm (102) has an aperture (111) into which the underside of each collector assembly is wedged. The collector assemblies are interconnected so that the outlet of the lowest assembly (112) is coupled to the inlet of the vertically adjacent assembly (113). In this manner, all the collectors are interconnected and the total assembly has a single input and single output through which the heat transfer medium flows. It has been found by experimentation that the vertical spacing of the collector assemblies can be adjusted to an optimum to provide the maximum heat production dependent on the latitude at which the assembly is used. Other features include the provision to tilt the central pillar (101) to provide further alteration in the inclination of the inclined walls of each collector to improve the versatility of the assembly.

Although in the embodiments described above, the diameter of the collectors is defined as about 1 metre, it is understood that much larger units are also envisaged by the invention. Furthermore, the spacing of the parallel sheets may be much larger than 5 mm, depending on the required upper temperature of the transfer medium. It is further understood that the transfer medium could be air or gas, in which case, the spacing of the sheets would be much greater, preferably up to 20 mm thick. When plastics sheets are used, acrylic plastic has been found satisfactory for the transparent sheets, whilst nylon may be used for the matt coated or reflective sheets.

It is considered that the collector assembly as described above provides a simple yet highly effective means for utilizing the rays of the sun to heat a fluid transfer medium such as water. The collector assemblies are of simple design using readily available comparatively cheap components. The collector assemblies have been specifically designed to ensure that it is not essential to use the more expensive types of heat conductive material such as copper and brass. The use of plastics has been encouraged in many of the embodiments to reduce the cost of the assemblies.

It has been discovered that by use of a solar collector having the form described above, the rays are collected for most of the daylight hours irrespective of where the sun is in the sky. There is no need for the provision of unsightly and expensive banks of solar panels, nor is there any requirement for the expensive tracking mechanisms to ensure that the panels track the rays of the sun. The collector can be simply fitted to the roof of a building with the container positioned within the roof and the solar panel projecting outwardly to collect the rays of the sun. The use of a coil of heat conductive material to define a truncated, cone-shaped collector panel has proven to be an extremely effective and efficient means for heating a domestic water supply.

**Claims**

1. A solar collector comprising a collector means in the form of an inverted cone and a transparent cover member (82) characterised in that the collector means is in the form of a pair of parallel extending closely spaced apart sheets (80, 81) of heat conducting material, the sheets being secured together to define a passageway for heat transfer medium, the collector means having a fluid inlet (83) and outlet (84); the cover member (82) being of corresponding shape to that of the collector means, the collector means and cover including a drain aperture (77) at the apex of the cone whereby the collector means is covered by the transparent cover member.

2. A solar collector according to claim 1 characterised in that the collector means is mounted on a conical heat insulating panel (70).

3. A solar collector according to either claim 1 or 2 characterised in that the sheets (80, 81) are designed to define a fluid passageway that follows a spiral path from the fluid inlet (83) to the fluid outlet (84).

4. A solar collector according to claim 3 characterised in that the fluid passageway is defined by a spiral ridge between the sheets (80, 81).

5. A solar collector according to claim 1 characterised in that a spirally wound pipe (74) is positioned between the sheets (80, 81), the fluid passageway being defined by the interior of the pipe.

6. A collector assembly comprising a plurality of collectors according to any one of claims 1 to 5 characterised in that the collectors (111) (112) are arranged vertically spaced on a support bracket assembly (100), the collectors being in fluid interconnection, the vertical spacing being selected to give desired heat production depending on the latitude of use and intensity of the sun.

7. A collector assembly according to claim 6 characterised in that the inclination of the support bracket assembly (100) may be varied to alter angle of incidence of each solar collector mounted thereon.

## Patentansprüche

1. Sonnenkollektor, der ein Kollektormittel in Form eines ungekehrten Konus und ein durchsichtiges Abdeckglied (82) umfasst, dadurch gekennzeichnet, dass das Kollektormittel in Form eines Paars sich parallel erstreckender, eng nebeneinander angebrachter Bahnen (80, 81) aus wärmeleitendem Material vorliegt, wobei die Bahnen so miteinander verbunden sind, dass sie einen Durchgang für das Wärmeübertragungsmedium bilden, und das Kollektormittel einen Flüssigkeitseinlass (83) und -auslass (84) aufweist, wobei die Form des Abdeckgliedes (82) der Form des Kollektormittels entspricht, das Kollektormittel und die Abdeckung eine Ablauföffnung (77) auf der Spitze der Abdeckung enthalten, wobei das Kollektormittel durch das durchsichtige Abdeckglied abgedeckt wird.

2. Sonnenkollektor nach Anspruch 1, dadurch gekennzeichnet, dass das Kollektormittel auf einer konischen, wärmeisolierenden Platte (70) angebracht ist.

3. Sonnenkollektor nach entweder Anspruch 1 oder 2, dadurch gekennzeichnet, dass die Bahnen (80, 81) so gestaltet sind, dass sie einen Flüssigkeitsdurchgang bilden, der einer spiralförmigen Bahn vom Flüssigkeitseinlass (83) bis zum Flüssigkeitsauslass (84) folgt.

4. Sonnenkollektor nach Anspruch 3, dadurch gekennzeichnet, dass der Flüssigkeitsdurchgang durch eine spiralförmige Kante zwischen den Bahnen (80, 81) definiert wird.

5. Sonnenkollektor nach Anspruch 1, dadurch gekennzeichnet, dass eine spiralgewickelte Rohrleitung (74) zwischen den Bahnen (80, 81) angebracht ist, wobei der Flüssigkeitsdurchgang durch die Innenseite der Rohrleitung definiert wird.

6. Kollektorenanordnung, die eine Vielzahl von Kollektoren nach einem der Ansprüche 1 bis 5 umfasst, dadurch gekennzeichnet, dass die Kollektoren (111, 112) vertikal voneinander entfernt auf einer Tragarmanordnung (100) angebracht sind, wobei die Kollektoren durch die Flüssigkeit miteinander verbunden sind, und der vertikale Abstand so ausgewählt wird, dass eine gewünschte Wärmeerzeugung je nach Breitengrad des Verwendungsortes und Intensität der Sonne erreicht wird.

7. Kollektorenanordnung nach Anspruch 6, dadurch gekennzeichnet, dass die Neigung der Tragarmanordnung (100) verändert werden kann, um den Einfallwinkel jedes darauf befestigten Sonnenkollektors zu verändern.

## Revendications

1. Capteur solide comprenant un moyen de captage en forme de cône renversé et un élément de couverture transparent (82), caractérisé en ce que le moyen de captage est représenté sous forme de deux feuilles (80, 81) en matériau conducteur de la chaleur s'étendant parallèlement l'une à l'autre et de façon très rapprochée l'une de l'autre, les feuilles étant fixées l'une à l'autre de manière à définir un passage pour un fluide caloporteur, le moyen de captage ayant une entrée (83) et une sortie (84) pour le fluide, l'élément de couverture (82) présentant une forme correspondante à celle du moyen de captage, le moyen de captage et la couverture comprennent une ouverture d'évacuation (77) au sommet de la couverture, ceci pour permettre au moyen de captage d'être recouvert par l'élément de couverture transparent.

2. Capteur solaire suivant la revendication 1, caractérisé en ce que le moyen de captage est monté sur une plaque conique calorifuge (70).

3. Capteur solaire suivant la revendication 1 ou 2, caractérisé en ce que les feuilles (80, 81) sont réalisées de manière à définir un passage pour le fluide suivant une trajetoire en spirale allant de l'entrée (83) à la sortie (84) pour le fluide.

4. Capteur solaire suivant la revendication 3, caractérisé en ce que le passage pour le fluide est défini par une nervure en spirale entre les feuilles (80, 81).

5. Capteur solaire suivant la revendication 1, caractérisé en ce qu'un tuyau enroulé en spirale (74) est positionné entre les feuilles (80, 81), le passage pour le fluide étant défini par l'intérieur du tuyau.

6. Ensemble de captage comprenant une pluralité de capteurs suivant l'une quelconque des revendications 1 à 5, caractérisé en ce que les capteurs (111, 112) sont disposés verticalement l'un au-dessus de l'autre de façon espacée sur un dispositif de support (100) à consoles, les capteurs étant en relation fluidiques les uns avec les autres, l'espacement vertical entre les capteurs étant choisi de façon à obtenir une production de chaleur déterminée en fonction de la latitude de l'endroit où est utilisé l'ensemble et de l'intensité du soleil.

7. Ensemble de captage suivant la revendication 6, caractérisé en ce que l'inclination du dispositif de support (100) à consoles peut être variée afin de modifier l'angle d'incidence de chaque capteur solaire qu'il porte.

**IIG. 1.**

**IIG. 2.**

**IIG. 3.**

**IIG. 4.**

FIG. 5.

FIG. 6.

$\overline{III}.7.$

$\overline{III}.8.$